# EUROPÄISCHE PATENTSCHRIFT

(11) **EP 2 574 427 B1**
(45) Veröffentlichungstag und Bekanntmachung des Hinweises auf die Patenterteilung: **06.08.2014**
(21) Anmeldenummer: 12186626.3
(22) Anmeldetag: 28.09.2012
(51) Int. Cl.: B25J 15/02

(54) **Handhabungsmodul, insbesondere Greif- Linear- oder Drehmodul und zugehörige Handhabungsvorrichtung**
Handling module, in particular gripping, linear or rotary module and corresponding handling device
Module de manipulation, notamment module de saisie, module linéaire ou module rotatif, et dispositif de manipulation correspondant

(30) Priorität: 30.09.2011 DE 202011106204 U
(43) Veröffentlichungstag der Anmeldung: 03.04.2013
(73) Patentinhaber: Schunk GmbH & Co. KG Spann- und Greiftechnik, 74348 Lauffen am Neckar (DE)
(72) Erfinder: Schleusener, Tobias, 75031 Eppingen (DE)
(74) Vertreter: DREISS Patentanwälte PartG mbB

(56) Entgegenhaltungen:
- EP-A2- 0 136 719
- US-A- 3 572 807
- US-A- 4 762 455

## Beschreibung

Die Erfindung betrifft ein Handhabungsmodul, insbesondere Greif-, Linear- oder Drehmodul, mit wenigstens einem verfahrbaren Stellmittel, mit einem Anschlussabschnitt zum Anordnen einer eine Antriebswelle aufweisenden Antriebseinheit und mit einem im Bereich des Anschlussabschnitts vorgesehenen, mit dem Stellmittel bewegungsgekoppelten Drehglied, wobei bei einem Verdrehen des Drehglieds das Stellmittel insbesondere entlang der Richtung verfahren wird und wobei beim Anschluss der Antriebseinheit an das Greifmodul das Drehglied mit der Antriebswelle koppelbar ist. Die Erfindung betrifft außerdem eine Handhabungsvorrichtung, umfassend ein solches Modul.

Aus der US 3 527 807 A ist ein Manipulator mit einem Antriebssystem bekannt. Bei insbesondere Greifmodulen besteht das Bedürfnis, die Antriebseinheit, je nach vorhandenem Bauraum, entweder parallel oder quer zum Greifmodul anzuordnen. Bei quer zum

Greifmodul angeordneter Antriebseinheit verläuft dann die Drehachse des Drehglieds im Wesentlichen senkrecht zur Drehachse der Antriebswelle. Bei paralleler Anordnung verläuft die Drehachse des Drehglieds im Wesentlichen parallel zur Drehachse der Antriebswelle.

Der vorliegenden Erfindung liegt nun die Aufgabe zugrunde, eine möglichst einfache und dennoch funktionssichere Drehkopplung zwischen Handhabungsmodul und Antriebseinheit bereitzustellen.

Diese Aufgabe wird durch ein erfindungsgemäßes Handhabungsmodul beziehungsweise durch eine erfindungsgemäße Handhabungsvorrichtung, die ein erfindungsgemäßes Modul sowie eine Antriebseinheit umfasst, gelöst.

Gemäß der Erfindung ist folglich vorgesehen, dass das Drehglied einen umfangsseitigen Koppelbereich und einen planseitigen Koppelbereich aufweist, so dass je nach anzuordnendem Antrieb entweder der umfangsseitige Koppelbereich oder der planseitige Koppelbereich mit der Antriebswelle koppelbar ist. Folglich weist das eine Funktionsbauteil, nämlich das Drehglied, zwei verschiedene Bereiche zur Kopplung mit der Antriebswelle auf. Je nach Anordnung der Antriebswelle relativ zum Drehglied, kann folglich entweder der umfangsseitige Koppelbereich oder der planseitige Koppelbereich Verwendung finden. Als planseitiger Koppelbereich wird dabei der senkrecht zur Drehachse des Drehglied verlaufende Bereich des Drehglieds verstanden, der allerdings eine beliebige Kontur haben kann. Unter umfangsseitigem Koppelbereich wird der parallel zur Drehachse des Drehglieds verlaufende Bereich des Drehglieds verstanden.

Dabei ist denkbar, dass der Anschlussabschnitt einen das Drehglied umgebenden Gehäuseabschnitt umfasst, der eine erste Aussparung zur Kopplung der Antriebswelle mit dem umfangsseitigen Koppelbereich und/oder eine zweite Aussparung zur Kopplung der Antriebswelle mit dem planseitigen Koppelbereich aufweist. Dadurch kann gewährleistet werden, dass die Antriebswelle von unterschiedlichen Richtungen her mit dem Drehglied, beziehungsweise mit dem jeweiligen Koppelbereich des Drehglieds, drehgekoppelt werden kann. Die Antriebswelle, beziehungsweise die Antriebseinheit, kann dabei wenigstens abschnittsweise die jeweilige erste oder zweite Aussparung durchgreifen. Die Aussparung, die nicht verwendet wird, kann beispielsweise mit einem entsprechenden Element abgedeckt werden.

Ferner ist vorteilhaft, wenn der umfangsseitige Koppelbereich stirnradartig ausgebildet ist und eine Gerad- oder Schrägverzahnung aufweist. Eine derartige stirnradartige Ausbildung kann auf einfache Weise hergestellt werden und ist zur Übertragung größerer Drehmomente geeignet. Allerdings ist im Rahmen der Erfindung auch denkbar, dass eine Reibkopplung zwischen dem Drehglied und der Antriebswelle vorgesehen sein kann; beispielsweise ist der umfangsseitige Koppelbereich dann als entsprechend ausgebildete Reibfläche vorgesehen.

Zudem ist denkbar, dass der planseitige Koppelbereich kronenradartig ausgebildet ist und eine Gerad- oder Schrägverzahnung aufweist. Die kronenartige Ausbildung hat den Vorteil, dass auch hier eine sichere Übertragung von vergleichsweise hohen Drehmomenten gewährleistet sein kann. Allerdings ist gemäß der Erfindung auch denkbar, dass der planseitige Koppelbereich als Reibkopplung ausgebildet ist.

Ferner ist denkbar, dass der planseitige Koppelbereich kegelradratig ausgebildet ist und eine Gerad- oder Schrägverzahnung aufweist.

Gemäß einer weiteren Ausgestaltung der Erfindung ist denkbar, dass der umfangsseitige Koppelbereich und/oder der planseitige Koppelbereich schraubenradartig ausgebildet sind. Dies kann dann vorteilhaft sein, wenn das Drehglied und die Antriebswelle entsprechend sich kreuzende Achsen aufweisen.

Gemäß der Erfindung kann vorgesehen sein, dass das Modul als Greifmodul ausgebildet ist und dass das Stellmittel als wenigstens eine Greifbacke ausgebildet ist. Ferner ist denkbar, das Modul als Linearmodul ausgebildet ist und dass das Stellmittel Stelltisch ausgebildet ist oder dass das Modul als Drehmodul ausgebildet ist und dass das Stellmittel als Drehteller ausgebildet ist.

Wie bereits angesprochen, wird die der Erfindung zugrunde liegende Aufgabe auch durch eine Handhabungsvorrichtung, insbesondere eine Greif-, Linear- oder Drehvorrichtung gelöst, die ein erfindungsgemäßes Modul und eine am Modul anzuordnende, eine Antriebswelle umfassende Antriebseinheit aufweist. Bei der Anordnung der Antriebseinheit am Modul ist dann das Drehglied mit der Antriebswelle unmittelbar oder mittelbar, beziehungsweise über ein geeignetes Getriebe, gekoppelt. Die Kopplung kann dabei entweder über den planseitigen Koppelbereich oder den umfangsseitigen Koppelbereich des Drehglieds erfolgen.

Zur Drehkopplung der Antriebswelle mit dem Drehglied ist vorzugsweise denkbar, dass die Antriebswelle ein Antriebsritzel aufweist.

Eine vorteilhafte Anordnung des Moduls mit der Antriebseinheit ergibt sich dann, wenn die Drehachse der Antriebswelle senkrecht zur Drehachse des Drehglieds verläuft. Dabei ist vorteilhaft, wenn das Antriebsritzel direkt mit dem Drehglied, und vorzugsweise mit dem planseitigen Koppelbereich des Drehglieds, zusammenwirkt.

Eine andere Anordnung ergibt sich dann, wenn die Drehachse der Antriebswelle parallel zur Drehachse des Drehglieds verläuft. Dabei ist insbesondere denkbar, dass zwischen dem Antriebsritzel der Antriebswelle und dem Drehglied ein Anbaugetriebe vorgesehen ist. Über das Anbaugetriebe kann der Abstand zwischen dem Drehglied und der Antriebswelle überbrückt werden.

Diesbezüglich ist vorteilhaft, wenn die Übersetzung des Anbaugetriebes derart ist, dass sich die gleiche Gesamtübersetzung ergibt wie bei einem direkten Zusammenwirken des Antriebsritzels mit dem Drehglied bei senkrecht zur Drehachse des Drehglieds verlaufender Drehachse der Antriebswelle. Dies hat den Vorteil, dass unabhängig von der Anordnung der Antriebseinheit, nämlich parallel oder quer zum Modul, sich eine gleiche Gesamtübersetzung ergibt. Insofern ist es dann nicht erforderlich, die Getriebeübersetzung entsprechend anzupassen.

Vorzugsweise ist die Antriebseinheit derart ausgebildet, dass sie so an das Modul anordenbar ist, dass die Drehachse der Antriebswelle senkrecht oder parallel zur Drehachse des Drehglieds verläuft. Dadurch wird gewährleistet, dass ein und dieselbe Antriebseinheit unterschiedlich an das Modul anbaubar ist.

Die Antriebseinheit ist insbesondere pneumatisch oder elektrisch betätigbar. Bei pneumatischer Betätigung kann ein Pneumatikmotor, bei elektrischer Betätigung ein Elektromotor Verwendung finden.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine perspektivische Ansicht auf eine Greifvorrichtung mit parallel zum Greifmodul angeordneter Antriebseinheit;
- Figur 2: eine perspektivische Ansicht auf eine Greifvorrichtung mit dem Greifmodul gemäß Figur 1 mit senkrecht zum Greifmodul angeordneter Antriebseinheit;
- Figur 3: den Anschlussabschnitt des Greifmoduls gemäß Figur 1 und 2 in Unter- und Seitenansicht;
- Figur 4: das als Einzelteil dargestellte Drehglied des Greifmoduls gemäß Figur 1 und 2;
- Figur 5: einen Querschnitt durch den Anschlussabschnitt des Greifmoduls gemäß Figur 1; und
- Figur 6: einen Längsschnitt durch das Greifmodul gemäß Figur 2.

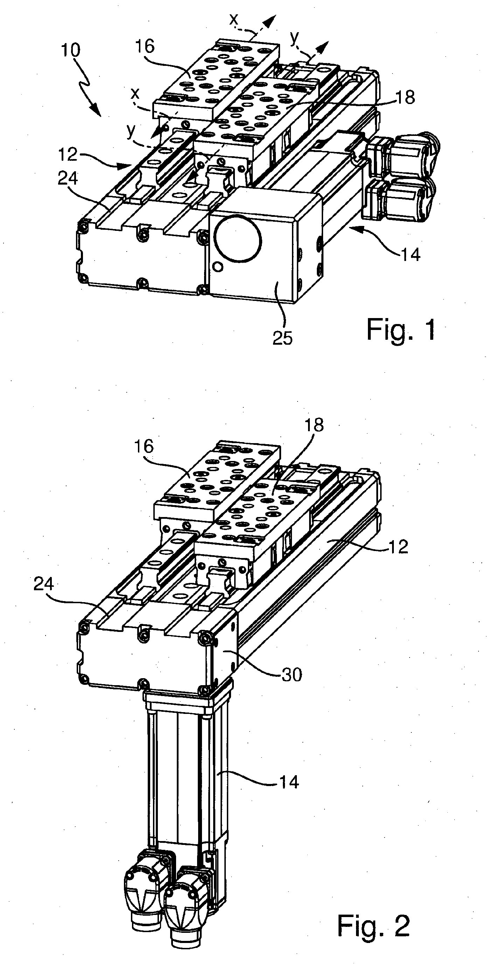

In Figur 1 ist eine Handhabungsvorrichtung in Form einer Greifvorrichtung 10 dargestellt, die ein Greifmodul 12 und eine an das Greifmodul 12 angeordnete Antriebseinheit 14 umfasst. Das Greifmodul 12 weist dabei jeweils entlang einer Richtung x, y verfahrbare Stellmittel in Form von Backen 16 und 18 auf. An den Backen 16, 18 können beispielsweise Spannfinger angeordnet sein, mit denen Werkstücke gespannt werden können. Die Antriebseinheit 14 ist dabei parallel zum Greifmodul 12, beziehungsweise zur Bewegungsrichtung x, y der Backen 16, 18 angeordnet.

In der Figur 2 ist nun eine Greifvorrichtung 20 dargestellt, die ein zur Greifvorrichtung 10 identisches Greifmodul 12 und eine ebenfalls zur Greifvorrichtung 10 identische Antriebseinheit 14 umfasst. Anders als in der Figur 1 ist bei der Figur 2 die Antriebseinheit 14 senkrecht zum Greifmodul 12 angeordnet.

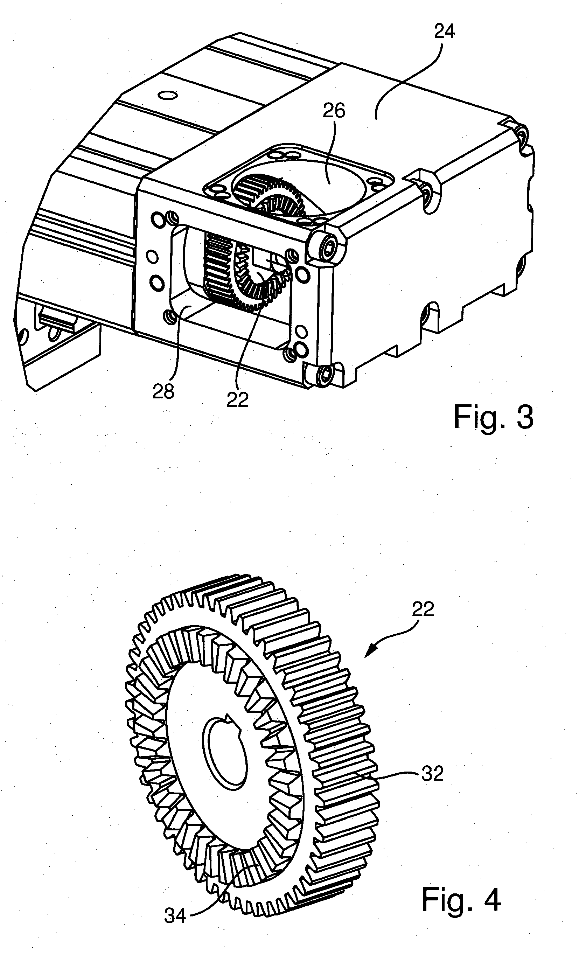

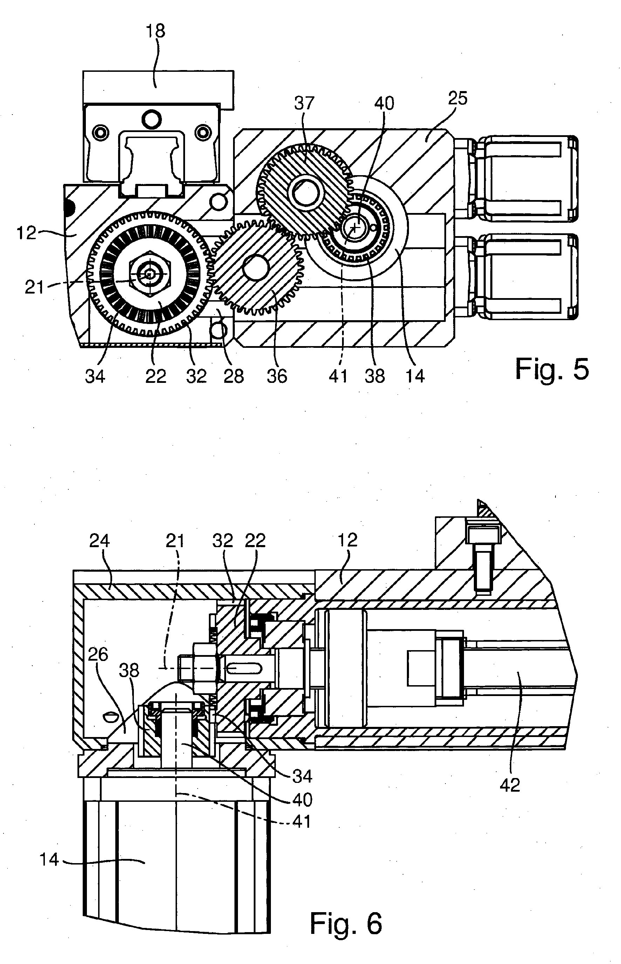

Die Antriebseinheit 14 gemäß Figur 1 und Figur 2 umfasst eine drehbare Antriebswelle 40, die elektrisch oder pneumatisch in Drehung versetzt werden kann. Die Antriebswelle 40 ist in Figur 5 und 6 deutlich zu erkennen und ist um die Drehachse 41 verdrehbar. Bei den Greifvorrichtungen 10, 20 treibt diese Antriebswelle 40 ein greifmodulseitiges, um eine Drehachse 21 verdrehbares Drehglied 22 an, das in Figur 3 und 4 deutlich zu erkennen ist. Das Drehglied 22 ist innerhalb des Greifmoduls 12, über ein entsprechendes Getriebe, mit den Backen 16, 18 derart bewegungsgekoppelt, dass beim Verdrehen des Drehglieds 22, je nach Drehrichtung des Drehglieds 22, die Backe 16 beziehungsweise 18 entlang der Richtung x beziehungsweise y hin oder her verfahren wird. Hierzu kann beispielsweise zwischen dem Drehglied 22 und den Backen 16, 18 ein Spindelgetriebe Verwendung finden.

Wie aus Figur 1 und Figur 2 deutlich wird, weist das jeweilige Greifmodul 12 einen Anschlussabschnitt 24 auf, an dem die Antriebseinheit 14 angeordnet ist. Bei der Ausführungsform gemäß Figur 1 ist die Antriebseinheit über ein Anbaugetriebe 25 mit dem Anschlussabschnitt 24 verbunden. Bei der Ausführungsform gemäß Figur 2 ist die Antriebseinheit 14 direkt an den Anschlussabschnitt 24 angeflanscht.

Wie aus Figur 3 deutlich wird, weist der Anschlussabschnitt 24 eine erste Aussparung 26 auf, durch welche, wie in Figur 2 gezeigt, die Antriebswelle der Antriebseinheit 14 zur Drehkopplung mit dem Drehglied 22 hindurchragt. Ferner weist der Anschlussabschnitt 24 eine zweite Aussparung 28 auf, durch welche das Drehglied 22 mit der Antriebseinheit 14, beziehungsweise mit dem Anbaugetriebe 25, drehkoppelbar ist, wie es in Figur 1 gezeigt ist. Die jeweils nicht Verwendung findende Aussparung 26, 28 wird dann, wie beispielsweise in Figur 2 gezeigt, mit einem Deckelelement 30 abgedeckt.

Wie insbesondere aus Figur 3 und Figur 4 deutlich wird, weist das Drehglied 22 zum einen einen umfangsseitigen Koppelbereich 32 auf, der stirnradartig ausgebildet ist und eine Geradverzahnung aufweist. Zum anderen weist das Drehglied 22 einen planseitigen Koppelbereich 34 auf, der kronenradartig ausgebildet ist und eine Geradverzahnung vorsieht. Je nach Anbaulage der Antriebseinheit 14 wirkt zum einen der stirnseitige Koppelbereich 32 oder der kronseitige Koppelbereich 34 mit der Antriebseinheit 14 zusammen. Dies wird anhand den Figuren 5 und 6 näher erläutert.

In der Figur 5, die einen Querschnitt durch den Anschlussabschnitt 24 beziehungsweise das Anbaugetriebe 25 zeigt, ist das Drehglied 22 deutlich zu erkennen. Der umfangsseitige Koppelbereich 32 des Drehglieds 22 wirkt dabei über zwei anbaugetriebeseitige Getrieberäder 36, 37, die ineinander in Eingriff stehen, mit einem an der Antriebswelle 40 der Antriebseinheit 14 vorgesehenen Antriebsritzel 38 zusammen.

Wie aus Figur 5 deutlich wird, wird über das Anbaugetriebe 25 der Abstand zwischen der Drehachse der Antriebswelle 40 und der Drehachse des Drehglieds 22, abzüglich dem halben Durchmesser des Drehglieds und Antriebsritzels 38, überbrückt.

In Figur 6, die einen Längsschnitt durch die Greifvorrichtung 20 gemäß Figur 2 zeigt, wird deutlich, dass dort das Drehglied 22 über dessen planseitigen Kopplungsbereich 34 direkt mit dem Antriebsritzel 38 die Antriebseinheit 14 zusammenwirkt. Das Antriebsritzel 38 greift dabei in die Aussparung 26 ein. Hier findet eine direkte Drehkopplung zwischen Antriebsritzel 38 und Drehglied 22 statt.

Aus Figur 6 wird ferner deutlich, dass das Drehglied 22 über verschiedene Wellenabschnitte mit einer Spindelwelle 42 drehgekoppelt ist, die, was nicht dargestellt ist, mit einer backenseitigen Spindelmutter zusammenwirkt, so dass beim Verdrehen der Spindelwelle 42 die Spindelmutter samt jeweiliger Backe entlang der jeweiligen Richtung x, y verfahren wird.

Die Übersetzung des Anbaugetriebes 25 ist dabei so gewählt, dass, unabhängig davon, ob die Antriebseinheit gemäß Figur 1 parallel zum Greifmodul 12 oder gemäß Figur 2 senkrecht zum Greifmodul 12 angeordnet wird, stets die gleiche Übersetzung zwischen Antriebswelle 40 und Drehglied 22 erfolgt. Dies hat den Vorteil, dass unabhängig von der Anbaulage der Antriebseinheit 14 am Greifmodul 12 gleiche Greifcharakteristiken vorliegen.

Insbesondere durch Vorsehen des Drehglieds 22 mit den zwei unterschiedlichen Koppelbereichen 32 und 34 kann erreicht werden, dass die Antriebseinheit 14 in unterschiedlichen Einbaulagen, nämlich einmal parallel und einmal quer zum Greifmodul, am Greifmodul angebaut werden kann, ohne dass aufwändige und störanfällige Drehkopplungen vorzusehen sind.

## Patentansprüche

1. Handhabungsmodul, insbesondere Greif-, Linear- oder Drehmodul (12), mit wenigstens einem verfahrbaren Stellmittel (16, 18), mit einem Anschlussabschnitt (24) zum Anordnen einer eine Antriebswelle (40) umfassenden Antriebseinheit (14) und mit einem im Bereich des Anschlussabschnitts (24) vorgesehenen, mit dem Stellmittel (16, 18) bewegungsgekoppelten Drehglied (22), wobei beim Anschluss der Antriebseinheit (14) an das Greifmodul das Drehglied (22) mit der Antriebswelle (40) koppelbar ist, **dadurch gekennzeichnet; dass** das Drehglied (22) einen umfangsseitigen Koppelbereich (32) und einen planseitigen Koppelbereich (34) aufweist, so dass je nach anzuordnendem Antrieb (14) entweder der umfangsseitige Koppelbereich (32) oder der planseitige Koppelbereich (34) mit der Antriebswelle (40) koppelbar ist.

2. Modul (12) nach Anspruch 1, **dadurch gekennzeichnet, dass** der Anschlussabschnitt (24) einen das Drehglied (22) umgebenden Gehäuseabschnitt umfasst, der eine erste Aussparung (28) zur Kopplung der Antriebswelle (40) mit dem umfangsseitigen Koppelbereich (32) und/oder eine zweite Aussparung (26) zur Kopplung der Antriebswelle (40) mit dem planseitige Koppelbereich (34) aufweist.

3. Modul (12) nach Anspruch 1 oder 2, **dadurch gekennzeichnet, dass** der umfangsseitige Koppelbereich (32) stirnradartig ausgebildet ist und eine Gerad- oder Schrägverzahnung aufweist.

4. Modul (12) nach Anspruch 1, 2 oder 3, **dadurch gekennzeichnet, dass** der planseitige Koppelbereich (34) kronenradartig ausgebildet ist und eine Gerad- oder Schrägverzahnung aufweist.

5. Modul (12) nach einem der vorherigen Ansprüche, **dadurch gekennzeichnet, dass** der umfangsseitige Koppelbereich und/oder der planseitige Koppelbereich schraubenradartig ausgebildet sind.

6. Modul (12) nach einem der vorherigen Ansprüche, **dadurch gekennzeichnet, dass** das Modul als Greifmodul ausgebildet ist und dass das Stellmittel als wenigstens eine Greifbacke ausgebildet ist.

7. Modul (12) nach einem der vorherigen Ansprüche, **dadurch gekennzeichnet, dass** das Modul als Linearmodul ausgebildet ist und dass das Stellmittel Stelltisch ausgebildet ist.

8. Modul (12) nach einem der vorherigen Ansprüche, **dadurch gekennzeichnet, dass** das Modul als Drehmodul ausgebildet ist und dass das Stellmittel als Drehteller ausgebildet ist.

9. Handhabungsvorrichtung (10, 20), insbesondere Greif-, Linear- oder Drehvorrichtung umfassend ein Modul (12) nach einem der vorherigen Ansprüche und eine am Modul (12) anzuordnende, eine Antriebswelle (40) umfassende Antriebseinheit (14), wobei bei Anordnung der Antriebseinheit (14) am Modul (12) das Drehglied (22) mit der Antriebswelle (40) gekoppelt ist.

10. Handhabungsvorrichtung (10, 20) nach Anspruch 9, **dadurch gekennzeichnet, dass** die Antriebswelle (40) ein Antriebsritzel (38) zur Drehkopplung mit dem Drehglied (22) aufweist.

11. Handhabungsvorrichtung (20) nach Anspruch 9 oder 10, **dadurch gekennzeichnet, dass** die Drehachse (41) der Antriebwelle (40) senkrecht zur Drehachse (21) des Drehglieds (22) verläuft.

12. Handhabungsvorrichtung (10) nach Anspruch 9 oder 10, **dadurch gekennzeichnet, dass** die Drehachse (41) der Antriebwelle (40) parallel zur Drehachse (21) des Drehglieds (22) verläuft.

13. Handhabungsvorrichtung (10) nach Anspruch 12, dass zwischen dem Antriebsritzel (38) und dem Drehglied (22) ein Anbaugetriebe (25) vorgesehen ist.

14. Handhabungsvorrichtung (10) nach Anspruch 13, **dadurch gekennzeichnet, dass** die Übersetzung des Anbaugetriebes (25) derart ist, dass sich die gleiche Gesamtübersetzung ergibt wie bei einem direkten Zusammenwirken des Antriebsritzels (38) mit dem Drehglied (22) bei senkrecht zur Drehachse des Drehglieds (22) verlaufender Drehachse der Antriebwelle (40).

15. Handhabungsvorrichtung (10, 20) nach einem der Ansprüche 9 bis 15, **dadurch** gekerinzeichnet, **dass** die Antriebeinheit (14) derart ausgebildet ist, dass sie so an das Modul (12) anordenbar ist, dass die Drehachse (41) der Antriebwelle (40) senkrecht oder parallel zur Drehachse (21) des Drehglieds (22) verläuft.

## Claims

1. A handling module, in particular a gripping, linear or rotary module (12), having at least one mobile adjusting means (16, 18), having a connection portion (24), for disposing a drive unit (14) that includes a drive shaft (40), and having a rotary member (22) that is provided in the region of the connection portion (24) and is motion-coupled to the adjusting means (16, 18), wherein upon connection of the drive unit (14) to the gripping module, the rotary member (22) can be coupled to the drive shaft (40), **characterized in that** the rotary member (22) has one coupling region (32) on its circumference and one coupling region (34) on its plane side, so that depending on the drive (14) to be disposed, either the coupling region (32) on the circumference or the coupling region (34) on the plane side can be coupled to the drive shaft (40).

2. The module (12) of claim 1, **characterized in that** the connection portion (24) includes a housing portion surrounding the rotary member (22), which housing portion has a first recess (28) for coupling the drive shaft (40) to the coupling region (32) on the circumference and/or a second recess (26) for coupling the drive shaft (40) to the coupling region (34) on the plane side.

3. The module (12) of claim 1 or 2, **characterized in that** the coupling region (32) on the circumference is embodied on the order of a spur wheel and has a straight or spiral toothing.

4. The module (12) of claim 1, 2 or 3, **characterized in that** the coupling region (34) on the plane side is embodied on the order of a crown wheel and has a straight or spiral toothing.

5. The module (12) of one of the foregoing claims, **characterized in that** the coupling region on the circumference and/or the coupling region on the plane side is embodied on the order of a helical gear wheel.

6. The module (12) of one of the foregoing claims, **characterized in that** the module is embodied as a gripping module, and that the adjusting means is embodied as at least one gripping jaw.

7. The module (12) of one of the foregoing claims, **characterized in that** the module is embodied as a linear module, and that the adjusting means is embodied as a adjusting table.

8. The module (12) of one of the foregoing claims, **characterized in that** the module is embodied as a handling module, and that the adjusting means is embodied as a rotary table.

9. A handling device (10, 20), in particular a gripping, linear or rotary device including a module (12) of one of the foregoing claims and a drive unit (14) that is to be disposed on the module (12) and that includes a drive shaft (40), wherein upon the disposition of the drive unit (14) on the module (12), the rotary member (22) is coupled to the drive shaft (40).

10. The handling device (10, 20) of claim 9, **characterized in that** the drive shaft (40) has a drive pinion (38) for rotary coupling to the rotary member (22).

11. The handling device (20) of claim 9 or 10, **characterized in that** the axis of rotation (41) of the drive shaft (40) extends perpendicular to the axis of rotation (21) of the rotary member (22).

12. The handling device (10) of claim 9 or 10, **characterized in that** the axis of rotation (41) of the drive shaft (40) extends parallel to the axis of rotation (21) of the rotary member (22).

13. The handling device (10) of claim 12, that between the drive pinion (38) and the rotary member (22), a directly attached gear (25) is provided.

14. The handling device (10) of claim 13, **characterized in that** the gear ration of the directly attached gear (25) is such that the same gear ratio is obtained as with direct cooperation of the drive pinion (38) with the rotary member (22), when the axis of rotation of the drive shaft (40) extends perpendicular to the axis of rotation of the rotary member (22).

15. The handling device (10, 20) of one of claims 9-14, **characterized in that** the drive unit (14) is embodied such that it can be disposed on the module (12) in such a way that the axis of rotation (41) of the drive shaft (40) extends perpendicular or parallel to the axis of rotation (21) of the rotary member (22).

## Revendications

1. Module de manipulation, en particulier module de préhension, module linéaire ou module rotatif (12) comprenant au moins un moyen de réglage (16, 18) mobile, une section de raccordement (24) pour installer une unité d'entraînement (14) comprenant un arbre d'entraînement (40) et comprenant un élément rotatif (22) prévu dans la zone de la section de raccordement (24) et couplé en mouvement avec le moyen de réglage (16, 18), l'élément rotatif (22) pouvant être couplé avec l'arbre d'entraînement (40) lors du raccordement de l'unité d'entraînement (14) au module de préhension, **caractérisé en ce que** l'élément rotatif (22) présente une zone de couplage circonférentielle (32) et une zone de couplage latérale (34) de sorte que, en fonction de l'entraînement (14) à installer, on peut coupler soit la zone de couplage circonférentielle (32) soit la zone de couplage latérale (34) à l'arbre d'entraînement (40).

2. Module (12) selon la revendication 1, **caractérisé en ce que** la section de raccordement (24) comprend une section de logement entourant l'élément rotatif (22), laquelle section présente un premier évidement (28) pour coupler l'arbre d'entraînement (40) avec la zone de couplage circonférentielle (32) et/ou un deuxième évidement (26) pour coupler l'arbre d'entraînement (40) avec la zone de couplage latérale (34).

3. Module (12) selon la revendication 1 ou 2, **caractérisé en ce que** la zone de couplage circonférentielle (32) est réalisée sous la forme d'un pignon droit et présente une denture droite ou hélicoïdale.

4. Module (12) selon la revendication 1, 2 ou 3, **caractérisé en ce que** la zone de couplage latérale (34) est réalisée sous la forme d'une roue de chant et présente une denture droite ou hélicoïdale.

5. Module (12) selon l'une des revendications précédentes, **caractérisé en ce que** la zone de couplage circonférentielle et/ou la zone de couplage latérale sont réalisées sous la forme d'une roue hélicoïdale.

6. Module (12) selon l'une des revendications précédentes, **caractérisé en ce que** le module est réalisé sous la forme d'un module de préhension et **en ce que** l'élément de réglage est réalisé sous la forme d'au moins une mâchoire de préhension.

7. Module (12) selon l'une des revendications précédentes, **caractérisé en ce que** le module est réalisé sous la forme d'un module linéaire et **en ce que** l'élément de réglage est réalisé sous la forme d'une table de réglage.

8. Module (12) selon l'une des revendications précédentes, **caractérisé en ce que** le module est réalisé sous la forme d'un module rotatif et **en ce que** l'élément de réglage est réalisé sous la forme d'un plateau rotatif.

9. Dispositif de manipulation (10, 20), en particulier dispositif de préhension, dispositif linéaire ou dispositif rotatif comprenant un module (12) selon l'une des revendications précédentes et une unité d'entraînement (14) à installer sur le module (12) et comprenant un arbre d'entraînement (40), l'élément rotatif (22), lors de l'installation de l'unité d'entraînement (14) sur le module (12), étant couplé à l'arbre d'entraînement (40).

10. Dispositif de manipulation (10, 20) selon la revendication 9, **caractérisé en ce que** l'arbre d'entraînement (40) présente un pignon d'entraînement (38) pour l'accouplement en rotation avec l'élément rotatif (22).

11. Dispositif de manipulation (20) selon la revendication 9 ou 10, **caractérisé en ce que** l'axe de rotation (41) de l'arbre d'entraînement (40) s'étend perpendiculairement à l'axe de rotation (21) de l'élément rotatif (22).

12. Dispositif de manipulation (10) selon la revendication 9 ou 10, **caractérisé en ce que** l'axe de rotation (41) de l'arbre d'entraînement (40) s'étend parallèlement à l'axe de rotation (21) de l'élément rotatif (22).

13. Dispositif de manipulation (10) selon la revendication 12, **caractérisé en ce qu'**il est prévu entre le pignon d'entraînement (38) et l'élément rotatif (22) un entraînement annexe (25).

14. Dispositif de manipulation (10) selon la revendication 13, **caractérisé en ce que** la transmission de l'entraînement annexe (25) est telle que l'on obtient le même rapport total de réduction qu'avec une action directe du pignon d'entraînement (38) avec l'élément rotatif (22) avec un axe de rotation de l'arbre d'entraînement (40) s'étendant perpendiculairement à l'axe de rotation de l'élément rotatif (22).

15. Dispositif de manipulation (10, 20) selon l'une des revendications 9 à 14, **caractérisé en ce que** l'unité d'entraînement (14) est réalisée de telle façon qu'elle peut être installée sur le module (12) de façon à ce que l'axe de rotation (41) de l'arbre d'entraînement (40) s'étende perpendiculairement ou parallèlement à l'axe de rotation (21) de l'élément rotatif (22).
